# EUROPEAN PATENT SPECIFICATION

(11) **EP 0 691 231 B1**
(45) Date of publication and mention of the grant of the patent: **29.07.1998**
(21) Application number: 95303088.9
(22) Date of filing: 05.05.1995
(51) Int. Cl.: B60J 10/02

(54) **Window glass sealing and fixing arrangements**
Dichtungselement für Fenster und Befestigungsvorrichtung
Joint d'étanchéité pour fenêtre et dispositif de fixation

(30) Priority: 01.07.1994 GB 9413297
(43) Date of publication of application: 10.01.1996
(73) Proprietor: DRAFTEX INDUSTRIES LIMITED, Edinburgh EH2 3AP, Scotland (GB)
(72) Inventor: Burstet, Pierre, F-55110 Reims (FR)
(74) Representative: Foster, David Martyn

(56) References cited:
- FR-A- 1 394 484
- FR-A- 2 035 153
- FR-A- 2 092 925
- FR-A- 2 218 213
- GB-A- 607 425
- US-A- 2 233 335
- US-A- 4 364 209

## Description

The invention relates to a window glass fixing and sealing arrangement, comprising a fixing channel which is sized to embrace the periphery of a window glass, the outside of one side wall of the channel carrying clip means extending away from the channel for clippingly engaging mounting means extending around the window opening in which the window glass is to be mounted, and sealing means providing a seal between the window glass and the mounting means.

Such a window glass fixing and sealing arrangement is known from FR-A-1 394 484. In this known arrangement, however, the material forming the arrangement is of a flexible nature and the clip means comprises a lip extending along the length of the fixing arrangement. In order to fit the arrangement to the mounting means around the window opening, it is necessary for the lip to engage the mounting means along the whole length of the arrangement. This is difficult to achieve in practice. The invention aims to overcome this problem.

According to the invention, therefore, the arrangement of the type disclosed in FR-A-1 394 484 is characterised in that the fixing channel is in the form of a length of stiff material shaped to match the shape and length of the periphery of the window glass with its two free ends adjacent to each other, the material being sufficiently longitudinally bendable to enable the channel to be temporarily opened out towards a rectilinear form and then allowed to snap back into its previous shape and into gripping engagement with the periphery of the window glass, and in that the clip means comprises a plurality of longitudinally spaced-apart clips.

In this way, therefore, the fixing channel can be pre-formed, such as by moulding, to match the shape of the window glass, including (for example) sharp or acute corners, but the process for manufacturing the fixing channel does not involve use of or handling of the glass. The fixing channel is fixed onto the periphery of the window glass simply by opening it out towards a rectilinear form so as to enable it to be snapped over the periphery of the window glass.

Further developments in line with claim 1 are referred to in the dependent claims.

Window glass fixing and sealing arrangements for vehicles and embodying the invention will now be described, by way of example only, with reference to the accompanying diagrammatic drawings in which:
Figure 1 is a side view of one of the fixing and sealing arrangements before it is assembled onto a window glass;
Figure 2 is a cross-section on the line II-II of Figure 1;
Figure 3 corresponds to Figure 1 but shows the window glass fixing and sealing arrangement assembled onto the window glass before it is fitted onto the vehicle;
Figure 4 is a cross-section on the line IV-IV of Figure 3 but after the window glass with the fixing and sealing arrangement mounted thereon has been mounted on the vehicle;
Figure 5 shows a modified form of one of the window glass fixing and sealing arrangements; and
Figure 6 shows a further modified form of one of the fixing and sealing arrangements.

The window glass fixing and sealing arrangement to be described in detail below is, in this example, for fixing a triangular-shaped window glass into position in a window opening in a motor vehicle body. However, modified forms of the fixing and sealing arrangement may be used for fixing window glass to window openings of other shapes.

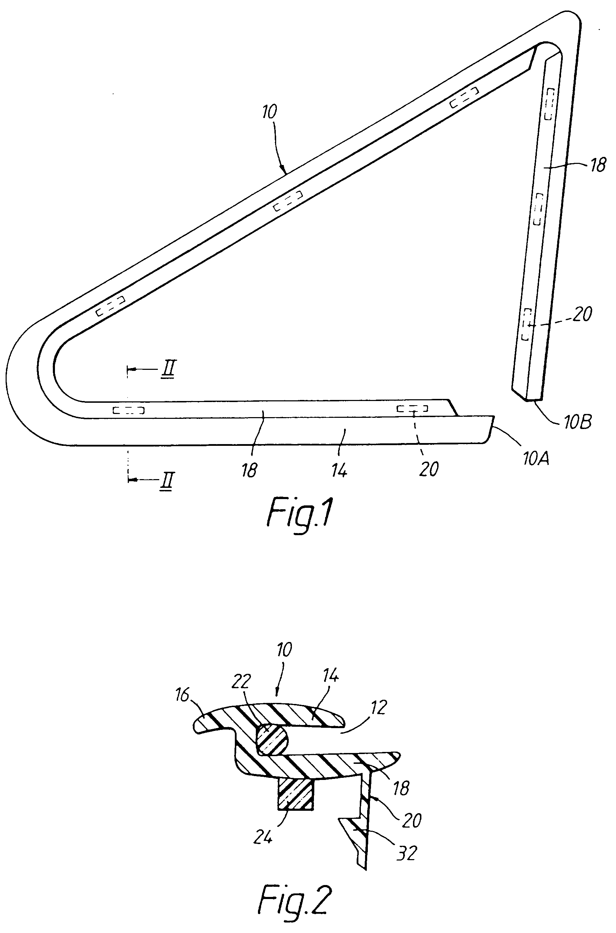

The window glass fixing and sealing arrangement 10 is produced by any suitable method but probably by moulding of flexible material (for example, an elastomer or plastics material). The arrangement is generally channel-shaped in cross-section as shown in Figure 2, providing a glass-receiving channel 12. One side wall 14 of the channel is extended beyond the base of the channel to provide a lip 16.

The other side wall 18 of the channel is provided with integrally formed clips 20 which are positioned at intervals along the length of the arrangement 10, as indicated in Figure 1.

Soft sealing material, such as in the form of a bead 22 of soft material, is placed in the base of the channel 12.

A length of soft sealing material 24 is mounted on the outside of the channel wall 18, such as by being adhesively secured to it.

As shown in Figure 1, the arrangement 10 is produced in a single length but with its ends 10A and 10B disconnected from each other.

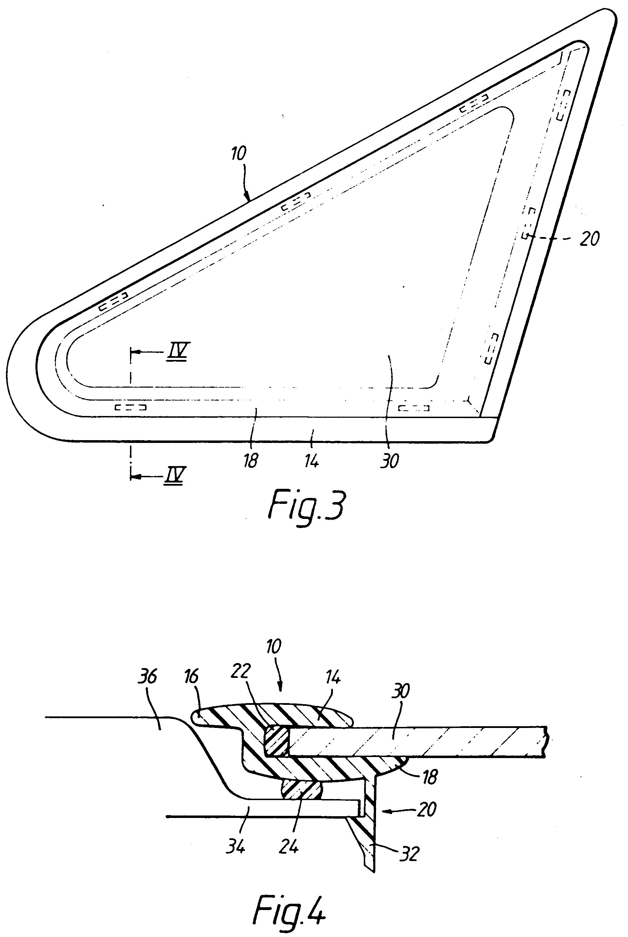

Figure 3 shows the fixing and sealing arrangement 10 of Figure 1 in position around the periphery of the triangular-shaped window glass 30. As shown in Figure 4, the window glass 30 is located within the channel 12 so as to make contact with the sealing material 22 at the base of the channel. The material of the fixing and sealing arrangement 10 is relatively stiff but sufficiently bendable to enable it to be opened out sufficiently to enable the channel to be snapped onto the periphery of the glass which it resiliently grips. The initially separate ends 10A and 10B of the fixing and sealing arrangement 10 are (see Fig. 1) brought together when the arrangement 10 is mounted on the window glass, as shown in Figure 3, and may be adhesively secured to each other or may be arranged to interlock mechanically. The whole assembly process can be carried out very speedily.

The window glass 30 with the fixing and sealing arrangement 10 mounted on it is then easily placed into position in the window opening of the vehicle body, as shown in Figure 4. The arrangement 10 is pushed into place in the window opening so that the heads 32 of the clips 20 engage on the inside of the vehicle bodywork 4 adjacent to the window opening.

During this process, the seal 24 becomes compressed between the side wall 18 of the fixing and sealing arrangement 10 and the vehicle bodywork 34.

The lip 16 of the fixing and sealing arrangement covers over the gap adjacent the bodywork 36.

The outer channel wall 14 can be arranged to be relatively rigid so as to ensure that the window glass 30 is held securely in position. At the same time, it can be relatively thin so as to reduce a substantially "flush-glass" effect.

The sealing bead 22 ensures that draughts or moisture cannot enter the vehicle around the peripheral edge of the window glass 30 within the channel 12.

The seal 24 ensures an effective weather-proof seal between the inside and outside of the vehicle.

The ends of the seal 24 (corresponding to the ends 10A and 10B of the fixing and sealing arrangement 10 - see Fig. 1) are brought into end-to-end contact and sealed together to ensure a continuous seal around the complete periphery of the glass.

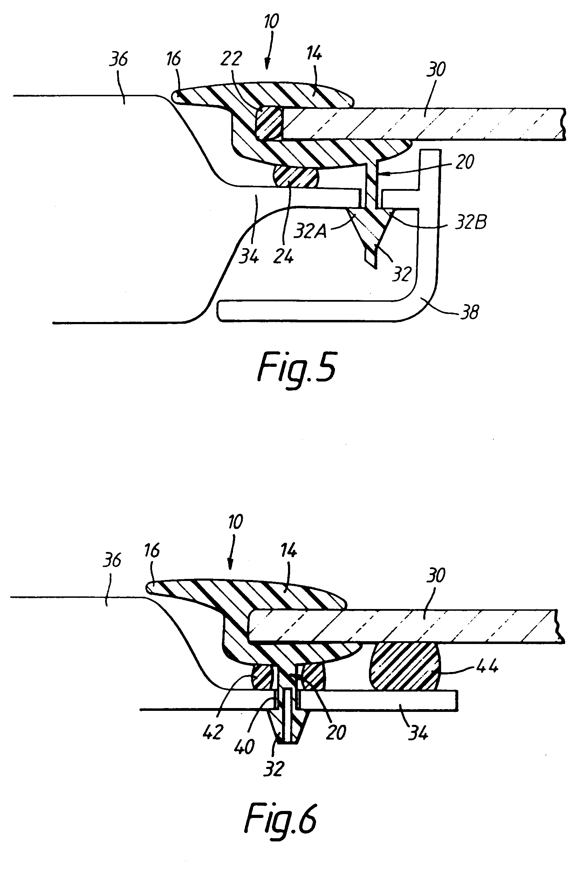

Figure 5 shows a modification in which the head 32 of each clip 20 has a wing 32A for gripping the bodywork 34 around the window opening and a wing 32B for securing an element 38 of the interior trim of the vehicle. The window glass 30 with the fixing and sealing arrangement 10 mounted thereon is first clipped into position in the window opening by means of the clips 20 whose wings 32A engage behind the bodywork 34. The trim part 38 is then clipped into position behind the wings 32B of each clip 20. The trim part 38 helps to increase the gripping effect of the clips 20.

Figure 6 shows a further modified arrangement. In this case, the clips 20, which each have heads 32 similar to those shown in Figure 5, are arranged to engage in holes 40 through the vehicle bodywork 34 adjacent the window opening, instead of engaging the edge of this bodywork portion. The heads 32 of the clips may be arranged to be resilient to enable them to be pushed through the holes 40.

The clips 20 are surrounded by rings 42 of soft sealing material. As shown in Figure 6, these sealing rings 42 ensure that the holes 40 are weather-proof.

In addition, the arrangement shown in Figure 6 includes a sealing strip 44 which is placed around the complete periphery of the window glass 30 and acts directly between the window glass and the bodywork portion 34. This sealing strip 44 can be secured on the window glass 30 by adhesive or by direct extrusion.

Because the sealing strip 44 acts directly between the window glass 30 and the bodywork member 34, the sealing bead 22 at the base of the channel 12 in the fixing and sealing arrangement illustrated in Figures 2,4 and 5 is not required.

The fixing and sealing arrangements described are advantageous in that they can be very easily and quickly mounted on the window glass by a single mounting operation; the complexities required by fixing arrangements which are secured on the window glass by direct moulding or by adhesive are avoided.

Discolouration of the window glass around its periphery caused by adhesive is avoided.

It is a simple matter to arrange for the material of the fixing and sealing arrangement 10 to be coloured if required. For example, it can be coloured to match the colour of the vehicle bodywork.

## Claims

1. A window glass fixing and sealing arrangement (10), comprising a fixing channel (12) which is sized to embrace the periphery of a window glass (30), the outside of one side wall (18) of the channel (12) carrying clip means (20) extending away from the channel for clippingly engaging mounting means (34) extending around a window opening in which the window glass (30) is to be mounted, and sealing means (22,24,42,44) providing a seal between the window glass and the mounting means, characterised in that the fixing channel (12) is in the form of a length of stiff material shaped to match the shape and length of the periphery of the window glass (30) with its two free ends (10A,10B) adjacent to each other, the material being sufficiently longitudinally bendable to enable the channel (30) to be temporarily opened out towards a rectilinear form and then allowed to snap back into its previous shape and into gripping engagement with the periphery of the window glass (30), and in that the clip means (20) comprises a plurality of longitudinally spaced-apart clips (20).

2. An arrangement according to claim 1, characterised in that the clips (20) each have a member extending substantially perpendicularly away from the said one channel side wall (18), each said member carrying an enlarged head (32) for clippingly engaging the mounting means (34).

3. An arrangement according to claim 2, characterised in that the enlarged head (32) of each clip (20) is adapted to engage an edge of the mounting means (34).

4. An arrangement according to claim 2, characterised in that each head (32) is arranged to engage in a hole (40) through the mounting means (34).

5. An arrangement according to any preceding claim, characterised in that the sealing means includes sealing material (22) mounted in the base of the channel (12) for sealing against the peripheral edge of the window glass (30).

6. An arrangement according to any preceding claim, characterised in that the sealing means includes a length of sealing material (24) mounted on the outside of the said one channel side wall (18) and adjacent to the clip means (20) for sealing between that side wall (18) and a face of the mounting means (34) extending around the window opening.

7. An arrangement according to any preceding claim, characterised in that the sealing means includes a length of sealing material (44) adapted to be positioned between a face of the mounting means (34) extending around the window opening and an adjacent face of the window glass (30).

8. A sealing arrangement according to any preceding claim, characterised in that the sealing means includes separate sealing means mounted on each clip means (42) for sealingly acting between the face of the mounting means (34) extending around the window opening and the said one channel side wall (18).

9. An arrangement according to claim 4, characterised in that the sealing means includes separate sealing means (42) extending around the member of each clip (20) and for sealingly acting between a face of the mounting means (34) extending around the window opening and the said one channel side wall (18), and a length of sealing material (44) extending around the window opening and acting between the said face of the mounting means (34) and the adjacent face of the window glass (30).

10. An arrangement according to any preceding claim, characterised in that the mounting means comprises a frame (34) for the window opening.

11. An arrangement according to any preceding claim, characterised in that the clip means includes means (32B) for securing a separate panel (38) extending at least partly around the window opening.

12. An arrangement according to claim 11, characterised in that the window glass is a window glass (30) in a vehicle body, and in which the separate panel (38) is part of the vehicle's interior trim.

13. An arrangement according to any one of claims 1 to 11, characterised in that the window glass is a window glass (30) in a vehicle body, and in that the fixing channel (12) includes a lip (16) extending away from the channel towards the vehicle body adjacent the periphery of the window opening.

14. An arrangement according to any preceding claim, characterised by means for securing the two ends (10A,10B) of the channel (12) together after the channel (12) has returned into gripping engagement with the periphery of the window glass (30).

## Patentansprüche

1. Vorrichtung zum Befestigen und Abdichten einer Fensterscheibe mit einem Befestigungskanal (12), der so bemessen ist, daß er den Rand einer Fensterscheibe (30) umfaßt, wobei die Außenseite einer Seitenwand (18) des Kanals (12) Klemmittel (20) trägt, die sich von dem Kanal fort erstrecken, um klemmend mit Befestigungsmitteln (34) in Eingriff zu treten, die sich um eine Fensteröffnung erstrecken, in der die Fensterscheibe anzuordnen ist, und mit Dichtungsmitteln (22, 24, 42, 44), die für eine Abdichtung zwischen der Fensterscheibe und den Befestigungsmitteln sorgen,
**dadurch gekennzeichnet,**
daß der Befestigungskanal (12) in der Form eines Längenabschnitts aus einem steifen Material ausgebildet ist, der so geformt ist, daß er der Form und Länge des Randes der Fensterscheibe (30) entspricht, wobei dessen zwei freien Enden (10A, 10B) aneinandergrenzen und das Material in Längsrichtung ausreichend biegsam ist, um dem Kanal (12) zu ermöglichen, daß dieser zeitweilig hin zu einer geradlinigen Form geöffnet wird und dann ein Zurückschnappen in dessen vorherige Form und den klemmenden Eingriff mit der Fensterscheibe (30) erlaubt, sowie dadurch, daß das Klemmittel (20) eine Mehrzahl in Längsrichtung verlaufende, voneinander beabstandete Laschen (20) umfaßt.

2. Vorrichtung nach Anspruch 1, dadurch gekennzeichnet, daß jede der Laschen (20) ein Glied aufweist, das sich im wesentlichen rechtwinklig fort von einer Seitenwand (18) des Kanals erstreckt, wobei jedes Glied einen erweiterten Kopf (32) trägt, um klemmend mit dem Befestigungsmittel (34) in Eingriff zu treten.

3. Vorrichtung nach Anspruch 2, dadurch gekennzeichnet, daß der erweiterte Kopf (32) jeder Lasche (20) dafür bestimmt ist, mit einer Kante des Befestigungsmittels (34) in Eingriff zu treten.

4. Vorrichtung nach Anspruch 2, dadurch gekennzeichnet, daß jeder Kopf (32) so angeordnet ist, daß er in ein Loch (40) durch das Befestigungsmittel (34) eingreift.

5. Vorrichtung nach einem der vorhergehenden Ansprüche, dadurch gekennzeichnet, daß das Dichtungsmittel ein Dichtungsmaterial (22) beinhaltet, das in der Basis des Kanals (12) befestigt ist, um gegen die Umfangskante der Fensterscheibe (30) abzudichten.

6. Vorrichtung nach einem der vorhergehenden Ansprüche, dadurch gekennzeichnet, daß das Dichtungsmittel einen Längenabschnitt eines Dichtungsmaterials (24) umfaßt, der auf der Außenseite der einen Seitenwand (18) des Kanals nahe dem Klemmittel (20) befestigt ist, um zwischen dieser Seitenwand (18) und einer sich um die Fensteröffnung erstreckenden Fläche des Befestigungsmittels (34) abzudichten.

7. Vorrichtung nach einem der vorhergehenden Ansprüche, dadurch gekennzeichnet, daß das Dichtungsmittel einen Längenabschnitt eines Dichtungsmaterials (44) umfaßt, das dafür bestimmt ist, zwischen einer sich um die Fensteröffnung erstreckende Fläche des Befestigungsmittels (34) und einer angrenzenden Fläche der Fensterscheibe positioniert zu werden.

8. Dichtungsanordnung nach einem der vorhergehenden Ansprüche, dadurch gekennzeichnet, daß das Dichtungsmittel separate Dichtungsmittel umfaßt, die an jedem Klemmittel (42) befestigt sind, um zwischen der sich um die Fensteröffnung erstreckende Fläche des Befestigungsmittels (34) und der einen Seitenwand (18) des Kanals abdichtend zu wirken.

9. Vorrichtung nach Anspruch 4, dadurch gekennzeichnet, daß das Dichtungsmittel ein separates Dichtungsmittel (42) umfaßt, das sich um das Glied jeder Lasche (20) erstreckt und zwischen einer sich um die Fensteröffnung erstreckenden Fläche des Befestigungsmittels (34) und der einen Seitenwand (18) des Kanals abdichtend wirkt, sowie einen Längenabschnitt eines Dichtungsmaterial (44) umfaßt, das sich um die Fensteröffnung erstreckt und zwischen der Fläche des Befestigungsmittels (34) und der angrenzenden Fläche der Fensterscheibe (30) wirkt.

10. Vorrichtung nach einem der vorhergehenden Ansprüche, dadurch gekennzeichnet, daß das Befestigungsmittel einen Rahmen (34) für die Fensteröffnung umfaßt.

11. Vorrichtung nach einem der vorhergehenden Ansprüche, dadurch gekennzeichnet, daß das Klemmittel Mittel (32B) umfaßt, um eine separate Platte (38) zu befestigen, die sich zumindest teilweise um die Fensteröffnung erstreckt.

12. Vorrichtung nach Anspruch 11, dadurch gekennzeichnet, daß die Fensterscheibe eine Fensterscheibe (30) in einer Fahrzeugkarosserie ist und wobei die separate Platte (38) ein Teil der Innenverkleidung des Fahrzeuges ist.

13. Vorrichtung nach einem der Ansprüche 1 bis 11, dadurch gekennzeichnet, daß die Fensterscheibe eine Fensterscheibe (30) in einer Fahrzeugkarosserie ist, und daß der Befestigungskanal (12) eine Lippe (16) umfaßt, die sich fort von dem Kanal in der Nähe der Fensteröffnung hin zur Fahrzeugkarosserie erstreckt.

14. Vorrichtung nach einem der vorhergehenden Ansprüche, gekennzeichnet durch Mittel, um die zwei Enden (10A, 10B) des Kanals (12) aneinander zu befestigen, nachdem der Kanal (12) wieder in den klemmenden Eingriff mit dem Rand der Fensterscheibe (30) eingetreten ist.

## Revendications

1. Agencement de fixation et d'étanchement (10) pour vitre de fenêtre, comprenant un profilé de fixation (12) qui a une taille propre à embrasser la périphérie d'une vitre de fenêtre (30), l'extérieur d'une paroi latérale (18) du profilé (12) portant des moyens à pince (20) qui s'étendent en éloignement du profilé pour engager par pincement des moyens de montage (34) qui s'étendent autour d'une ouverture de fenêtre dans laquelle on doit monter la vitre de fenêtre (30), et des moyens d'étanchéité (22, 24, 42, 44) qui assurent un joint entre la vitre de fenêtre et les moyens de montage, caractérisé en ce que le profilé de fixation (12) a la forme d'une longueur de matériau rigide conformé de manière à s'accorder à la taille et à la longueur de la périphérie de la vitre de fenêtre (30) avec ses deux extrémités libres (10A, 10B) adjacentes l'une à l'autre, le matériau étant flexible longitudinalement de manière suffisante pour permettre au profilé (30) d'être temporairement ouvert jusqu'à une forme rectiligne, puis pour lui permettre de retourner élastiquement dans sa forme précédente et en engagement de saisie avec la périphérie de la vitre de fenêtre (30), et en ce que les moyens à pince (20) comprennent une pluralité de pinces (20) espacées dans le sens longitudinal.

2. Agencement selon la revendication 1, caractérisé en ce que les pinces (20) ont chacune un élément qui s'étend sensiblement perpendiculairement en éloignement de ladite paroi latérale (18) du profilé, chacun desdits éléments portant une tête élargie (32) pour engager par pincement les moyens de montage (34).

3. Agencement selon la revendication 2, caractérisé en ce que la tête élargie (32) de chaque pince (20) est adaptée à engager un bord des moyens de montage (34).

4. Agencement selon la revendication 2, caractérisé en ce que chaque tête (32) est agencée pour s'engager dans un perçage (40) à travers les moyens de montage (34).

5. Agencement selon l'une quelconque des revendications précédentes, caractérisé en ce que les moyens d'étanchéité incluent un matériau d'étanchéité (22) monté dans la base du profilé (12) pour venir étancher contre le bord périphérique de la vitre de fenêtre (30).

6. Agencement selon l'une quelconque des revendications précédentes, caractérisé en ce que les moyens d'étanchéité incluent une longueur de matériau d'étanchéité (24) montée sur l'extérieur de ladite paroi latérale (18) du profilé et adjacente auxdits moyens à pince (20) pour assurer une étanchéité entre ladite paroi latérale (18) et une face des moyens de montage (34) qui s'étendent autour de l'ouverture de fenêtre.

7. Agencement selon l'une quelconque des revendications précédentes, caractérisé en ce que les moyens d'étanchéité incluent une longueur de matériau d'étanchéité (44) adaptée à être positionnée entre une face des moyens de montage (34) qui s'étendent autour de l'ouverture de fenêtre, et une face adjacente de la vitre de fenêtre (30).

8. Agencement selon l'une quelconque des revendications précédentes, caractérisé en ce que les moyens d'étanchéité incluent des moyens d'étanchement séparés montés sur chaque moyen à pince (42) pour agir en étanchement entre la face des moyens de montage (34) s'étendant autour de l'ouverture de fenêtre et ladite paroi latérale (18) du profilé.

9. Agencement selon la revendication 4, caractérisé en ce que les moyens d'étanchement incluent des moyens d'étanchement séparés (42) s'étendant autour de l'élément de chaque pince (20) et pour agir en étanchement entre une face des moyens de montage (34) qui s'étendent autour de l'ouverture de fenêtre et ladite paroi latérale (18) du profilé, et une longueur de matériau d'étanchéité (44) s'étendant autour de l'ouverture de fenêtre et agissant entre ladite face des moyens de montage (34) et la face adjacente de la vitre de fenêtre (30).

10. Agencement selon l'une quelconque des revendications précédentes, caractérisé en ce que les moyens de montage comprennent un cadre (34) pour l'ouverture de fenêtre.

11. Agencement selon l'une quelconque des revendications précédentes, caractérisé en ce que les moyens à pince incluent des moyens (32B) pour attacher un panneau séparé (38) qui s'étend au moins partiellement autour de l'ouverture de fenêtre.

12. Agencement selon la revendication 11, caractérisé en ce que la vitre de fenêtre est une vitre de fenêtre (30) dans une carrosserie de véhicule, et en ce que le panneau séparé (38) est une partie de l'habillage intérieur du véhicule.

13. Agencement selon l'une quelconque des revendications 1 à 11, caractérisé en ce que la vitre de fenêtre est une vitre de fenêtre (30) dans une carrosserie de véhicule, et en ce que le profilé de fixation (12) inclut une lèvre (16) qui s'étend en éloignement du profilé en direction de la carrosserie du véhicule adjacente à la périphérie de l'ouverture de fenêtre.

14. Agencement selon l'une quelconque des revendications précédentes, caractérisé par des moyens pour fixer les deux extrémités (10A, 10B) du profilé (12) ensemble après que le profilé (12) soit retourné en engagement de saisie avec la périphérie de la vitre de fenêtre (30).
